# EUROPÄISCHE PATENTSCHRIFT

(11) **EP 3 353 097 B1**
(45) Veröffentlichungstag und Bekanntmachung des Hinweises auf die Patenterteilung: **24.08.2022**
(21) Anmeldenummer: 16770921.1
(22) Anmeldetag: 22.09.2016
(51) Int. Cl.: B65G 1/137

(54) **BELADEVORRICHTUNG FÜR EINE WARENÜBERGABEVORRICHTUNG EINES AUTOMATISCHEN WARENLAGERS**
LOADING APPARATUS FOR AN ARTICLE-TRANSFER APPARATUS OF AN AUTOMATIC WAREHOUSE
DISPOSITIF DE CHARGEMENT POUR UN DISPOSITIF DE REMISE DE MARCHANDISES D'UN ENTREPÔT DE MARCHANIDISES AUTOMATIQUE

(30) Priorität: 24.09.2015 DE 102015218380
(43) Veröffentlichungstag der Anmeldung: 01.08.2018
(73) Patentinhaber: Gebr. Willach GmbH, 53809 Ruppichteroth (DE)
(72) Erfinder: MÜLLER, Hans-Friedrich, 53809 Ruppichteroth (DE); MÜLLER, Matthias, 53809 Ruppichteroth (DE); SCHMITZ, Stefan, 53819 Neunkirchen-Seelscheid (DE); LINGSLEBE, Tanja, 53809 Ruppichteroth (DE); SCHMITT, Werner, 53809 Ruppichteroth (DE); WILLACH, Jens, 53783 Eitorf (DE)
(74) Vertreter: dompatent von Kreisler Selting Werner - Partnerschaft von Patent- und Rechtsanwälten mbB
(86) Internationale Anmeldenummer: PCT/EP2016/072546
(87) Internationale Veröffentlichungsnummer: WO 2017/050897

(56) Entgegenhaltungen:
- EP-A1- 0 453 682
- US-A1- 2006 229 762
- US-A1- 2012 245 728

## Beschreibung

Die vorliegende Erfindung betrifft eine Warenübergabevorrichtung eines automatischen Warenlagers und ein automatisches Warenlager.

Es ist bekannt, dass Lagerflächen, wie beispielsweise Kanallager mit Lagerkanälen, über einen Manipulator befüllt werden. Dabei wird das Eingabeende der Lagerfläche von dem Manipulator angefahren und die Gegenstände werden an die Lagerplätze übergeben. Derartige Lager werden häufig für Waren, beispielsweise Medikamente in Apotheken, eingesetzt. Besonders geeignet für sogenannte schnelldrehende Waren sind Schrägfachbodenregale, bei denen die einzelnen Waren in Kanälen, die durch seitliche Begrenzung getrennt sind, auf einer Lagerfläche, die gegenüber einer Horizontalen geneigt ist, enthalten sind. Bei Entnahme eines unteren Gegenstandes rutschen die übrigen Gegenstände nach. In der Regel sind in jedem Kanal gleichartige Gegenstände enthalten. Die Gegenstände weisen beispielsweise quaderförmige Packungen auf, wobei Packungen gleichen Formats in einem Kanal eingebracht werden, dessen Kanalbreite auf die Packungsgröße abgestimmt ist. Auf derartigen Lagerflächen können jedoch auch Waren unterschiedlicher Form, z.B. Zylinder, und unterschiedlichen Formats innerhalb desselben Kanals gespeichert werden.

Üblicherweise befüllen die Manipulatoren die Lagerplätze, sobald eine vorgegebene Anzahl von Waren aus einem Lagerkanal entnommen worden ist. Dazu wird ein Manipulator mit mehreren der nachzufüllenden Gegenstände befüllt und der Manipulator fährt das Eingabeende der entsprechenden Lagerfläche an, um die Gegenstände zu übergeben.

Um die Nachfüllfunktion der Lagerflächen auf zuverlässige Weise zu gewährleisten, muss sichergestellt werden, dass die Manipulatoren geordnet mit den einzulagernden Gegenständen befüllt werden. Da bekannte Manipulatoren mit einer sehr hohen Geschwindigkeit innerhalb eines Lagers bewegt werden, ist eine manuelle Bestückung der Manipulatoren mit einem großen Sicherheitsrisiko verbunden. Daher werden Übergabevorrichtungen verwendet, in die die Gegenstände manuell oder automatisch eingelegt werden. Die Manipulatoren übernehmen die einzulagernden Gegenstände von der Übergabevorrichtung, um anschließend den vorgegebenen Lagerplatz anzufahren.

In der Praxis wird häufig eine sehr schnelle Befüllung eines Lagers gefordert. Daher werden zumeist gleichartige Gegenstände von dem Manipulator gleichzeitig transportiert. Um eine schnelle Befüllung des Manipulators zu ermöglichen, werden daher in einer Übergabevorrichtung die von einem Manipulator zu transportierenden Gegenstände für einen kurzen Zeitraum gelagert.

Die Anmelderin hat daher verschiedene Warenübergabevorrichtungen entwickelt, die beispielsweise unter dem Aktenzeichen DE 10 2013 218 538 oder DE 10 2014 208 405 zum Patent angemeldet sind. Diese Warenübergabevorrichtungen werden manuell bedient, wobei zumeist darauf geachtet werden muss, dass in einem Übergabekanal gleichartige Waren eingelegt werden. Durch die manuelle Bedienung muss bei den vorbekannten Warenübergabevorrichtungen stets ein Benutzer vor Ort anwesend sein, wobei dieser je nach Speicherkapazität der Übergabekanäle und Art der eingelegten Waren teilweise mehrere Minuten freie Zeit hat, bis wieder Ware in einen Übergabekanal eingefüllt werden muss. Wann jedoch eine Befüllung der Übergabekanäle wieder erfolgen muss, ist nur schwierig voraussehbar, so dass der Benutzer an der Übergabevorrichtung verweilen sollte. Die bekannten Übergabevorrichtungen sind direkt an den Warenlagern angeordnet. Die Warenanlieferung erfolgt jedoch zumeist an einer von dem Warenlager unterschiedlichen Position, so dass die Ware vor der Einlagerung noch von einer anderen Person zu der Übergabevorrichtung gebracht werden muss.

DE 10 2014 208 405 sieht eine Beladevorrichtung vor, die in Form von Stapelkanälen an der Warenübergabevorrichtung angeordnet ist. Hierbei müssen jedoch die Gegenstände als Stapel relativ geordnet eingegeben werden.

Bei größeren Warenlagern mit einem hohen Durchsatz an Waren ist es häufig wünschenswert, Waren mit einer hohen Geschwindigkeit, z.B. bei in Form von Warenpackungen mehrerer Packungen innerhalb kurzer Zeit, z.B. 20 Packungen und mehr pro Minute, einzugeben. Bei derartigen Lagern ist eine manuelle Eingabe häufig schwierig.

Es wäre daher wünschenswert, die Beladung einer eingangs genannten Warenübergabevorrichtung zu vereinfachen, wobei möglichst eine hohe Beladegeschwindigkeit erreicht werden soll.

EP 0 453 682 A1 offenbart eine Warenübergabevorrichtung nach dem Oberbegriff des Anspruch 1. Eine weitere Warenübergabevorrichtung mit Beladevorrichtung ist aus US 2012/245728 A1 bekannt.

Die der Erfindung zugrundeliegende Aufgabenstellung besteht darin, eine Warenübergabevorrichtung mit einer Beladevorrichtung zu schaffen, über die eine vereinfachte Beladung einer Warenübergabevorrichtung möglich ist sowie ein Warenlager mit einer Warenübergabevorrichtung.

Die erfindungsgemäße Warenübergabevorrichtung ist definiert durch die Merkmale des Anspruchs 1.

Das erfindungsgemäße Warenlager ist definiert durch die Merkmale des Anspruchs 15.

Die Erfindung betrifft eine Warenübergabevorrichtung eines automatischen Warenlagers mit einer Beladevorrichtung. Eine derartige Warenübergabevorrichtung ist zur Übergabe von Waren in ein automatisches Warenlager besonders geeignet, da durch das Vorsehen der Beladevorrichtung eine Beladung der Warenübergabevorrichtung mit einem sehr großen Warenpuffer auf einfache Art und Weise möglich ist.

Die Beladevorrichtung für eine erfindungsgemäße Warenübergabevorrichtung ist zur Aufnahme von Waren, insbesondere Warenverpackungen, wie beispielsweise Medikamentenpackungen, als Schüttgut und Übergabe an die Warenübergabevorrichtung geeignet. Sie besteht aus mindestens einem Behälter mit mehreren Fächern, in denen die Waren aufnehmbar sind, wobei die Fächer jeweils eine Beladeöffnung zum Eingeben der Waren und eine Entladeöffnung zur Ausgabe der Waren aufweisen.

Jede Entladeöffnung ist an der Unterseite des Behälters ausgebildet und jeweils mit mindestens einer Rückhalteklappe verschließbar, wobei die Rückhalteklappen zumindest teilweise den Boden des Behälters bilden. Jede Rückhalteklappe ist zum Öffnen separat, d.h. individuell, steuerbar. Die Rückhalteklappen sind somit in beliebiger Reihenfolge betätigbar.

Die erfindungsgemäße Beladevorrichtung hat den Vorteil, dass Waren als Schüttgut aufgenommen werden, indem diese in die Beladeöffnung eines Fachs eingegeben werden. Durch das Vorsehen eines Behälters mit mehreren Fächern kann eine große Anzahl von Waren gleichzeitig aufgenommen werden. Die Rückhalteklappen sorgen dafür, dass die in den Fächern aufgenommenen Waren in den Fächern verbleiben und erst gezielt durch eine Steuerung der Rückhalteklappen an die Warenübergabevorrichtung übergeben werden. Dadurch können die in der Beladevorrichtung aufgenommenen Waren über einen langen Zeitraum an die Warenübergabevorrichtung übergeben werden, indem nacheinander die einzelnen Fächer geöffnet werden. Durch die Unterteilung des Behälters in Fächer kann eine geeignete Portionierung von Waren zur Übergabe an die Warenübergabevorrichtung erreicht werden. Das Volumen eines Fachs des Behälters kann beispielsweise an das Aufnahmevolumen einer nachfolgenden, die Waren verarbeitenden Vorrichtung der Warenübergabevorrichtung, beispielsweise an das Aufnahmevolumen eines Aufzugkorbs eines Warenaufzugs, angepasst sein. Durch die Ausbildung der erfindungsgemäßen Beladevorrichtung mit an der Unterseite ausgebildeten Entladeöffnungen können die in den Fächern aufgenommenen Waren nach Öffnen der Rückhalteklappen auf einfache Art und Weise aus den Fächern fallen. Dadurch wird sichergestellt, dass bei dem Öffnen einer Rückhalteklappe sämtliche in dem Fach angeordnete Waren aus dem Fach zu der Warenübergabevorrichtung gelangen. Eine derartige Ausgestaltung der Beladevorrichtung hat ferner den Vorteil, dass die Beladevorrichtung auf einfache Art und Weise beispielsweise über einem Förderband der Warenübergabevorrichtung angeordnet werden kann und somit eine Übergabe der Waren von der Beladevorrichtung auf die Warenübergabevorrichtung auf einfache Art und Weise verwirklicht werden kann. Durch das entsprechende Fassungsvermögen der Fächer können ferner mittels der erfindungsgemäßen Beladevorrichtung Waren mittels der Warenübergabevorrichtung an ein automatisches Warenlager übergeben werden, ohne dass ein Benutzer Ware nachfüllen muss. Der Benutzer kann sich zwischenzeitlich anderen Aufgaben widmen, so dass Arbeitszeit eingespart werden kann. Durch die Beladeöffnung der Fächer ist die Beladevorrichtung zur Aufnahme von Schüttgut geeignet, so dass die Waren sehr schnell in die Beladevorrichtung eingefüllt werden können. Die erfindungsgemäße Beladevorrichtung eignet sich insbesondere für Warenübergabevorrichtungen, in denen eine Sortierung der Waren vorgenommen wird, so dass die Waren in diesem Falle unsortiert in die einzelnen Fächer eingefüllt werden können.

Die erfindungsgemäße Warenübergabevorrichtung nimmt somit Waren von der Beladevorrichtung an und übergibt sie beispielsweise an einen Manipulator des Warenlagers. Die erfindungsgemäße Warenübergabevorrichtung hat somit eine Annahme- und Übergabefunktion, die insbesondere automatisch erfolgen kann. Typische automatische Warenlager sind Apothekenlager, in denen Medikamente und andere Apothekenprodukte in Schachteln verpackt als Waren gelagert werden. Die erfindungsgemäße Warenübergabevorrichtung kann beispielsweise eine Sortierfunktion aufweisen, so dass die Waren, beispielsweise die Warenpackungen, unsortiert mittels der Beladevorrichtung in die Warenübergabevorrichtung eingegeben werden können.

Die erfindungsgemäße Warenübergabevorrichtung weist eine Fördervorrichtung auf, die unterhalb der Entladeöffnungen der Beladevorrichtung angeordnet ist oder anordenbar ist, und die die Waren von der Beladevorrichtung übernimmt. Die aus den Entladeöffnungen der Beladevorrichtung fallenden Waren können mittels der Fördervorrichtung in vorteilhafter Weise ins Innere der Warenübergabevorrichtung und zu einer Übergabestelle der Warenübergabevorrichtung zu dem automatischen Warenlager transportiert werden.

Die erfindungsgemäße Warenübergabevorrichtung weist eine Aussparung zur Aufnahme der Beladevorrichtung auf. Auf diese Weise lässt sich die Beladevorrichtung in vorteilhafter Weise an der Warenübergabevorrichtung anordnen.

Erfindungsgemäß ist ferner vorgesehen, dass in der Aussparung mindestens eine Schublade zur Aufnahme der Beladevorrichtung angeordnet ist. Mittels der Schublade lässt sich in vorteilhafter Weise eine erfindungsgemäße Beladevorrichtung, die beispielsweise eine Kistenform aufweist, an der Warenübergabevorrichtung anordnen. Mittels der Schublade kann gewährleistet werden, dass die Beladevorrichtung in die Warenübergabevorrichtung eingeschoben werden kann und sich in der korrekten Position für eine Übergabe der Waren an die Warenübergabevorrichtung befindet. Ferner kann mittels der Schublade verhindert werden, dass während des Entladevorgangs der Beladevorrichtung diese aus der Warenübergabevorrichtung herausgenommen wird.

In einem bevorzugten Ausführungsbeispiel der erfindungsgemäßen Warenübergabevorrichtung kann vorgesehen sein, dass die Beladeöffnungen an der Oberseite des Behälters ausgebildet sind. Dadurch lassen sich die Fächer auf einfache Art und Weise von oben befüllen.

Alternativ kann vorgesehen sein, dass die Beladeöffnungen in einer ersten Seitenwand des Behälters angeordnet sind. Auf diese Weise lässt sich die Beladevorrichtung in vorteilhafter Weise von einer Seite beladen. Die Beladeöffnungen können beispielsweise als Schütten ausgebildet sein. Die Schütten können beispielsweise einklappbar sein. Mittels derartiger Schütten lassen sich die Waren in vorteilhafter Weise als Schüttgut in die Fächer einfüllen.

Vorzugsweise ist vorgesehen, dass der Behälter als mobiler Behälter ausgebildet ist. Somit kann die Beladevorrichtung an einem von der Warenübergabevorrichtung entfernten Ort beladen werden und als mobiler Behälter zu der Warenübergabevorrichtung gebracht werden. Es kann beispielsweise vorgesehen sein, dass mehrere Beladevorrichtungen vorhanden sind und die Beladevorrichtungen austauschbar an der Warenübergabevorrichtung angeordnet sind. Während eine Beladevorrichtung Waren an die Warenübergabevorrichtung abgibt, kann an einem von der Warenübergabevorrichtung entfernten Ort, wie beispielsweise einem Raum für die Warenannahme, eine weitere Beladevorrichtung mit Waren befüllt werden und anschließend zu der Warenübergabevorrichtung transportiert werden.

Bei einer derartigen Ausgestaltung der Beladevorrichtung kann der Behälter beispielsweise die Form einer Tragkiste aufweisen.

Es kann auch vorgesehen sein, dass der Behälter auf einer Unterseite Rollen aufweist. Auf diese Weise lässt sich der Behälter in vorteilhafter Weise mittels der Rollen transportieren.

Vorzugsweise ist vorgesehen, dass eine Riegelvorrichtung die Rückhalteklappen in einer Schließposition hält, wobei die Riegelvorrichtung mit jeweils mindestens einem Riegel an einer der Rückhalteklappen angreift und wobei durch die Betätigung einer der Riegel eine der Rückhalteklappen schwerkraftbedingt öffenbar ist. Mittels einer derartigen Riegelvorrichtung lässt sich eine separate Steuerung der Rückhalteklappen auf einfache Art und Weise verwirklichen, indem die Riegel der Riegelvorrichtung einzeln steuerbar sind. Durch eine einzelne Betätigung eines Riegels lässt sich somit die Rückhalteklappe eines Faches öffnen, während die übrigen Fächer noch verschlossen bleiben. Dadurch kann auf einfache Art und Weise die Beladevorrichtung schrittweise entladen werden. Die Riegelvorrichtung kann Teil der Beladevorrichtung sein. Alternativ sind Ausführungen möglich, bei denen die Riegelvorrichtung Teil der Warenübergabevorrichtung ist und die einzelnen Riegel an den Rückhalteklappen angreifen, wenn die Beladevorrichtung an der Warenübergabevorrichtung angeordnet ist. In diesem Fall können für die Rückhalteklappen separate Sicherungen vorgesehen sein, die bei dem Transport der Beladevorrichtung wirken, so dass die Rückhalteklappen nicht unabsichtlich geöffnet werden.

Die Riegelvorrichtung kann mechanisch oder elektrisch antreibbar sein. Beispielsweise kann vorgesehen sein, dass die einzelnen Riegel der Riegelvorrichtung mechanisch, beispielsweise über einen manuell betätigten Hebel, geöffnet werden. Es besteht auch die Möglichkeit, dass die Riegelvorrichtung elektrisch angetrieben wird, so dass die Rückhalteklappen durch die Betätigung einer Steuerung durch den Benutzer geöffnet werden oder über eine automatische Steuerung. Beispielsweise kann vorgesehen sein, dass die Riegelvorrichtung von der Steuerung der Warenübergabevorrichtung gesteuert wird, so dass nach Bedarf der Warenübergabevorrichtung die Rückhalteklappen geöffnet werden, um Waren an die Warenübergabevorrichtung zu übergeben.

Vorzugsweise ist vorgesehen, dass eine Sicherheitsvorrichtung die Rückhalteklappen gegen ein unbeabsichtigtes Öffnen sperrt. Eine derartige Sicherheitsvorrichtung verhindert, dass beispielsweise während des Transports der Beladevorrichtung die Rückhalteklappen unbeabsichtigt geöffnet werden. Bei Ausführungsbeispielen, bei denen beispielsweise die Riegelvorrichtung an der Beladevorrichtung angeordnet ist, kann somit verhindert werden, dass bei einer Fehlfunktion eines Riegels oder durch ein unbeabsichtigtes Anstoßen eines Riegels eine Rückhalteklappe geöffnet wird. Bei einem Ausführungsbeispiel der Beladevorrichtung, bei dem keine Riegelvorrichtung vorgesehen ist bzw. eine Riegelvorrichtung an der Warenübergabevorrichtung angeordnet ist, kann durch die Sicherheitsvorrichtung sichergestellt werden, dass die Rückhalteklappen während des Transports verschlossen sind.

Vorzugsweise ist vorgesehen, dass die Sicherheitsvorrichtung ein Angreifelement zum Betätigen der Sperrfunktion der Rückhalteklappen aufweist. Mittels des Angreifelements ist die Sicherheitsvorrichtung somit betätigbar. Das Angreifelement kann selbstverständlich auch dazu dienen, die Rückhalteklappen zu entsperren. Das Angreifelement kann beispielsweise manuell betätigt werden, wenn die Beladevorrichtung an der Übergabevorrichtung angeordnet ist. Auch ist es möglich, dass das Angreifelement von der Warenübergabevorrichtung betätigbar ist, d.h., dass an der Warenübergabevorrichtung eine Auslösevorrichtung zur Betätigung des Angreifelementes angeordnet ist. In einem Ausführungsbeispiel der Erfindung kann vorgesehen sein, dass das Angreifelement zweiteilig ausgebildet ist, wobei ein erster Teil zum Sperren der Sperrvorrichtung betätigbar ist und eine zweiter Teil zum Entsperren.

In einem Ausführungsbeispiel der Erfindung ist vorgesehen, dass die Rückhalteklappen über eine Betätigung der Sicherungsvorrichtung schließbar sind. Mit anderen Worten: Bei einer geöffneten Stellung der Rückhalteklappen können durch eine Betätigung der Sicherungsvorrichtung in ihre Sperrposition die Rückhalteklappen geschlossen werden. Bei der Beladevorrichtung kann eine derartige Funktion grundsätzlich für das Schließen der Rückhalteklappen verwendet werden. Es besteht auch die Möglichkeit, dass für das Schließen der Rückhalteklappen eine separate Einrichtung vorgesehen ist, die beispielsweise an der Warenübergabevorrichtung angeordnet ist und durch ein Betätigen der Sicherheitsvorrichtung lediglich sichergestellt wird, dass beim Versagen dieser Einrichtung die Rückhalteklappen dennoch geschlossen werden.

In einem bevorzugten Ausführungsbeispiel der Erfindung ist vorgesehen, dass die Sicherungsvorrichtung mindestens eine Schubstange aufweist, die mittels Bolzen in einer Kulissenführung geführt ist, wobei in der Sperrposition die Bolzen an den Rückhalteklappen anliegen. Eine derartige Sicherungsvorrichtung hat sich als besonders vorteilhaft herausgestellt, da auf konstruktiv einfache Art und Weise die Rückhalteklappen gesperrt werden können. Durch das Vorsehen einer Schubstange lassen sich die Bolzen, die in der Sperrposition die Rückhalteklappen halten, auf einfache Art und Weise und gemeinsam in eine Entsperrposition bewegen. Mittels der Kulissenführung lassen sich die Bolzen in vorteilhafter Weise beim Entsperren von den Rückhalteklappen wegführen, so dass die Rückhalteklappen bei jeder Betätigung frei nach unten wegklappen können.

In einem bevorzugten Ausführungsbeispiel der Erfindung ist vorgesehen, dass die Sicherungsvorrichtung zwei Schubstangen aufweist, die an gegenüberliegenden Seiten des Behälters angeordnet sind und mit je einem Bolzen je Seite jeweils an einer Rückhalteklappe anliegen. Auf diese Weise wird verhindert, dass die Rückhalteklappen aufgrund des in den Fächern aufgenommenen Gewichts zu verbiegen drohen und somit Waren ungewollt aus den Fächern fallen können.

Vorzugsweise ist vorgesehen, dass in der Sperrposition der Sicherungsvorrichtung ein Federelement an dem Angreifelement anliegt und die Sicherungsvorrichtung in der Sperrposition hält. Dadurch wird gewährleistet, dass die Sicherungsvorrichtung beispielsweise während eines Transports des Behälters unbeabsichtigt von der Sperrposition in die Entsperrposition bewegt wird. Dadurch, dass das Federelement an dem Angreifelement anliegt, kann beim Angreifen an dem Angreifelement zum Entsperren der Sicherungsvorrichtung das Federelement gleichzeitig betätigt werden.

Die erfindungsgemäße Beladevorrichtung kann einen Metallrahmen aufweisen, in dem die Sicherungsvorrichtung angeordnet ist. Dadurch wird die Sicherungsvorrichtung beim Transport der Beladevorrichtung gegen mechanische Einwirkung von außen, wie beispielsweise Stoßeinwirkungen, geschützt. In dem Metallrahmen sind Öffnungen angeordnet, durch die die Schubstange bzw. die Schubstangen nach außen ragen können oder durch die zur Betätigung des Angreifelements von außen eingegriffen werden kann.

Die Fördervorrichtung kann beispielsweise ein Förderband sein. Die Fördervorrichtung kann dauerhaft unter den Entladeöffnungen der Beladevorrichtung bzw. unterhalb der Stelle, an der die Beladevorrichtungen anordenbar sind, angeordnet sein, oder es besteht die Möglichkeit, dass die Fördervorrichtung lediglich temporär für einen Entladevorgang aus der Beladevorrichtung angeordnet wird. Das Förderband kann seitliche, schräg zu der Bandoberfläche angeordnete Wände aufweisen, über die Waren auf das Förderband rutschen können. Die Wände bilden somit eine Art Trichter, der zu dem Förderband hin verläuft. Somit wird sichergestellt, dass aus den Fächern der Beladevorrichtung fallende Waren auf das Förderband gelangen.

In einer bevorzugten Ausführungsform der Erfindung ist eine Auslösevorrichtung zur Betätigung der Sicherungsvorrichtung der Beladevorrichtung vorgesehen, die an dem Angreifelement der Sicherungsvorrichtung angreift. Mittels der Warenübergabevorrichtung lässt sich somit die Sicherungsvorrichtung betätigen und beispielsweise aus einer Sperrstellung in eine Entsperrstellung bewegen. Dadurch wird sichergestellt, dass die Beladevorrichtung in der an der Warenübergabevorrichtung angeordneten Position betätigbar ist, so dass sich die Rückhalteklappen bei Bedarf öffnen. Die Auslösevorrichtung kann auch die Betätigung der Sicherungsvorrichtung zum Sperren der Beladevorrichtung vornehmen, beispielsweise wenn die Beladevorrichtung von der Warenübergabevorrichtung entfernt wird. Dadurch kann sichergestellt werden, dass beim Entfernen der Beladevorrichtung von der Warenübergabevorrichtung die Rückhalteklappen gesperrt werden oder geschlossen werden und gesperrt werden.

Vorzugsweise ist vorgesehen, dass die Auslösevorrichtung eine Entsperreinrichtung aufweist, die während des Entsperrens der Sicherungsvorrichtung gegen das Federelement drückt. Das Federelement kann beispielsweise als Blattfeder ausgebildet sein, wobei die Entsperreinrichtung durch eine Schrägfläche gebildet ist, die die Blattfeder elastisch verbiegt, um die Sicherungsvorrichtung freizugeben.

Die Auslösevorrichtung kann ein Anschlagselement aufweisen, das während eines Entnahmevorgangs der Beladevorrichtung gegen die Sicherungsvorrichtung drückt und diese in die Sperrposition bewegt. Dadurch wird sichergestellt, dass die Rückhalteklappen der Beladevorrichtung nach dem Entnehmen der Beladevorrichtung aus der Warenübergabevorrichtung mittels der Sicherungsvorrichtung gesperrt sind. Es wird somit verhindert, dass die Beladevorrichtung aus der Warenübergabevorrichtung entnommen werden kann, ohne dass die Rückhalteklappen gesperrt sind.

In einer besonders bevorzugten Ausführungsform der erfindungsgemäßen Warenübergabevorrichtung weist diese eine Riegelvorrichtung auf, die jeweils mit mindestens einem Riegel an einer Rückhalteklappe der Beladevorrichtung angreift. Mittels einer derartigen Riegelvorrichtung kann über die Warenübergabevorrichtung das Öffnen der Rückhalteklappen einer an der Warenübergabevorrichtung angeordneten Beladevorrichtung in vorteilhafter Weise gesteuert werden. Dabei kann vorgesehen sein, dass die Riegelvorrichtung für jeden Riegel einen separaten Antrieb aufweist. Der separate Antrieb kann beispielsweise jeweils als ein separater Antriebsmotor, beispielsweise als ein elektrisch betriebener Drehmagnet, verwirklicht sein. Auf diese Weise können die Riegel zum separaten Öffnen der Rückhalteklappen in vorteilhafter Weise gesteuert werden. Die Rückhalteklappen können somit selektiv, d.h. in einer beliebigen Reihenfolge und individuell, geöffnet werden.

In einer bevorzugten Ausführungsform der erfindungsgemäßen Warenübergabevorrichtung ist eine Betätigungsvorrichtung zum Schließen der Rückhalteklappen vorgesehen. Mittels der Betätigungsvorrichtung lassen sich die Rückhalteklappen beispielsweise bei der Entnahme der Beladevorrichtung in vorteilhafter Weise schließen. Die geschlossenen Rückhalteklappen können dann beispielsweise durch die Sicherungsvorrichtung gegen ein ungewolltes Öffnen gesperrt werden.

Vorzugsweise ist vorgesehen, dass die Betätigungsvorrichtung eine Streifplatte mit einem flexiblen Oberabschnitt aufweist, wobei die Streifplatte bei einer Bewegung der Beladevorrichtung über die Betätigungsvorrichtung die Rückhalteklappen schließt. Eine derartige Ausbildung der Betätigungsvorrichtung ermöglicht auf konstruktiv einfache Art und Weise einen Schließmechanismus für die Rückhalteklappen, indem durch eine einfache Bewegung der Beladevorrichtung über die Betätigungsvorrichtung die Rückhalteklappen nach oben in ihre Schließposition gedrückt werden.

Vorzugsweise ist vorgesehen, dass die Schublade ein Rahmenelement aufweist, das die Sicherungsvorrichtung in der Entsperrposition umgreift. Dadurch wird sichergestellt, dass die Beladevorrichtung in einem Zustand, in dem sich die Sicherungsvorrichtung in der Entsperrposition befindet, nicht aus der Schublade herausgehoben werden kann. Erst wenn die Sicherungsvorrichtung in ihrer Sperrposition ist und somit die Rückhalteklappen gesichert sind, lässt sich die Beladevorrichtung aus der Schublade herausnehmen.

Vorzugsweise ist vorgesehen, dass das Anschlagelement der Auslösevorrichtung mit der Schublade beweglich gekoppelt ist und eine Rückhalteeinrichtung das Anschlagelement beim Öffnen der Schublade ab einer vorgegebenen Öffnungsweite der Schublade gegenüber der Schublade fixiert. Dadurch wirkt das Anschlagelement erst ab der vorgegebenen Öffnungsweite der Schublade mit dem Angreifelement zusammen, so dass erst ab diesem Zustand die Sicherungsvorrichtung in die Sperrposition bewegt wird. Dadurch wird einerseits sichergestellt, dass die Sicherungsvorrichtung erst betätigt wird, wenn bereits durch die Betätigungsvorrichtung die Rückhalteklappen geschlossen sind und andererseits wird sichergestellt, dass erst wenn die Schublade eine vorgegebene Öffnungsweite aufweist, die Beladevorrichtung aus der Schublade herausgehoben werden kann. Auch der Teil der Auslösevorrichtung, der die Sicherungsvorrichtung beim Einschieben der Schublade entsperrt, kann an der Schublade angeordnet sein und wird somit mit der Schublade mitgeführt. Erst ab einer bestimmten Einschubtiefe der Schublade erfolgt eine Bewegung dieses Teils der Auslösevorrichtung gegenüber der Schublade, wodurch der Entsperrvorgang erfolgt. Die Bewegung dieses Teils der Auslösevorrichtung gegenüber der Schublade kann beispielsweise durch einen Anschlag an der Führung der Schublade ausgelöst werden. Die Entsperrfunktion kann somit in ähnlicher Weise erfolgen wie die Sperrfunktion. Die Anordnung der Teile der Auslösevorrichtung, die die Sicherungsvorrichtung betätigen, an der Schublade hat den Vorteil, dass diese Teile somit genau zu der Beladevorrichtung im in die Schublade eingesetzten Zustand und somit zu der Sicherungsvorrichtung ausgerichtet sind.

Es kann auch vorgesehen sein, dass die Betätigung der Sicherungsvorrichtung zum Sperren oder Entsperren sowie das Schließen der Rückhalteklappen durch eine Bewegung der Schublade erfolgt. Mit anderen Worten: Beim Einsetzen der Beladevorrichtung und/oder Einschieben der Schublade in die Warenübergabevorrichtung kann beispielsweise die Sicherungsvorrichtung zum Entsperren der Rückhalteklappen betätigt werden. Bei einem Öffnen der Schublade, um anschließend die Beladevorrichtung entnehmen zu können, kann beispielsweise die Betätigungsvorrichtung die Rückhalteklappen schließen und es kann eine Betätigung der Sicherungsvorrichtung zum Sperren der Rückhalteklappen erfolgen.

Vorzugsweise ist vorgesehen, dass an der Unterseite jeder Rückhaltklappe ein Vorsprungselement angeordnet ist, an dem jeweils ein Riegel angreift, wobei das Vorsprungselement eine Schrägfläche aufweist, die während des Schließvorgangs der Rückhalteklappe gegen den Riegel drückt. Mittels des Vorsprungselements wird somit sichergestellt, dass die Rückhalteklappe auch geschlossen werden kann, wenn sich der Riegel in der Schließposition befindet, indem während des Schließvorgangs der Rückhalteklappe der Riegel mittels der Schrägfläche zur Seite gedrückt wird und anschließend zur Anlage des Riegels an der Unterseite des Vorsprungselements zurückschnappt.

Die Erfindung betrifft ferner ein Warenlager, beispielsweise ein Apothekenlager, mit einer erfindungsgemäßen Warenübergabevorrichtung mit einer Beladevorrichtung, wobei das Warenlager mindestens einen Manipulator aufweist, der die Waren von der Warenübergabevorrichtung übernimmt. Mittels des Manipulators lassen sich die von der Warenübergabevorrichtung übergebenen Waren in vorteilhafter Weise in dem Warenlager einlagern.

Die Erfindung wird im Folgenden unter Bezugnahme auf die nachfolgenden Figuren näher erläutert.

Es zeigen:
Figur 1 eine schematische perspektivische Ansicht eines erfindungsgemäßen automatischen Warenlagers mit einer erfindungsgemäßen Warenübergabevorrichtung mit einer Beladevorrichtung,
Figur 2 eine Detaildarstellung einer Schublade der erfindungsgemäßen Warenübergabevorrichtung für eine Beladevorrichtung,
Figur 3 eine schematische perspektivische Darstellung der Beladevorrichtung,
Figur 4 eine schematische Darstellung der in Fig. 2 dargestellten Schublade in einer anderen Arbeitsposition,
Figur 5 eine schematische Seitendarstellung der in Fig. 2 dargestellten Schublade,

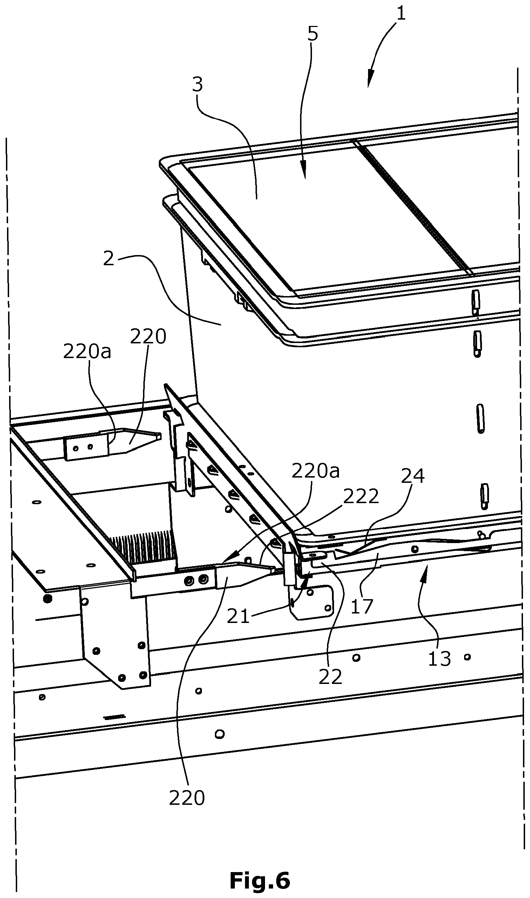

Figur 6 eine schematische Detaildarstellung der Sicherungsvorrichtung der Beladevorrichtung und
Figur 7 eine schematische Detailansicht der Riegelvorrichtung.

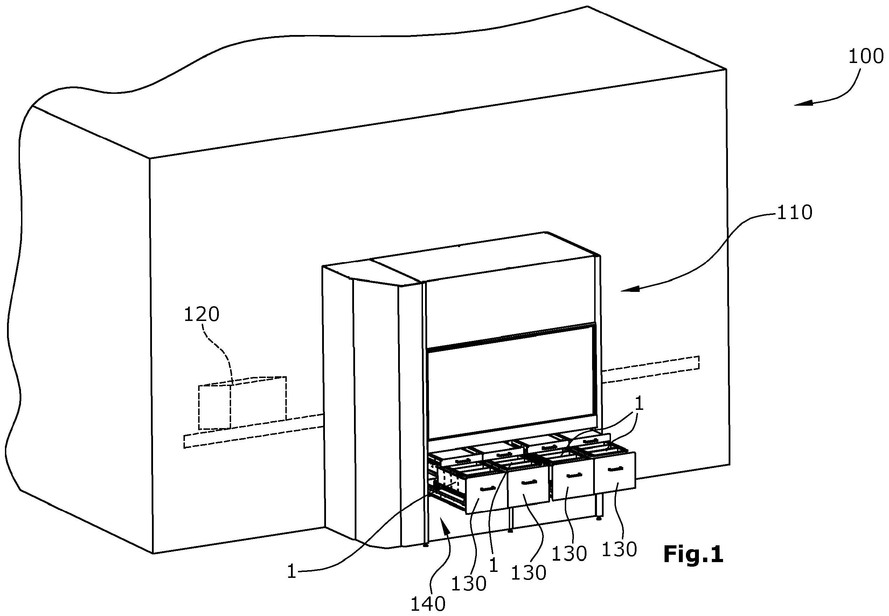

In Fig. 1 ist ein erfindungsgemäßes automatisches Warenlager 100 mit einer erfindungsgemäßen Warenübergabevorrichtung 110 schematisch dargestellt. In die erfindungsgemäße Warenübergabevorrichtung 110 können Waren eingegeben werden, die an einen in Fig. 1 lediglich angedeuteten Manipulator 120 übergeben werden, der Waren in nicht dargestellte Lagerplätze, wie beispielsweise Lagerkanäle, einsortieren kann. Das automatische Warenlager 100 kann beispielsweise ein Apothekenlager sein, in das Medikamente und andere Apothekenprodukte, die in Packungen, wie beispielsweise Schachteln, verpackt sind, eingelagert werden. Die erfindungsgemäße Warenübergabevorrichtung 110 nimmt dabei die Waren automatisch an und übergibt sie dem Manipulator 120. Die erfindungsgemäße Warenübergabevorrichtung 110 kann beispielsweise eingegebene Waren sortieren und in einem Zwischenpuffer für die Übergabe an den Manipulator 120 bereit halten.

Die Warenübergabevorrichtung 110 weist mehrere Schubladen 130 auf, die in einer Aussparung 140 angeordnet sind. Die Schubladen 130 dienen zur Aufnahme einer Beladevorrichtung 1. Mittels der erfindungsgemäßen Beladevorrichtung 1 können Waren als Schüttgut aufgenommen werden und in die erfindungsgemäße Warenübergabevorrichtung 110 eingegeben werden.

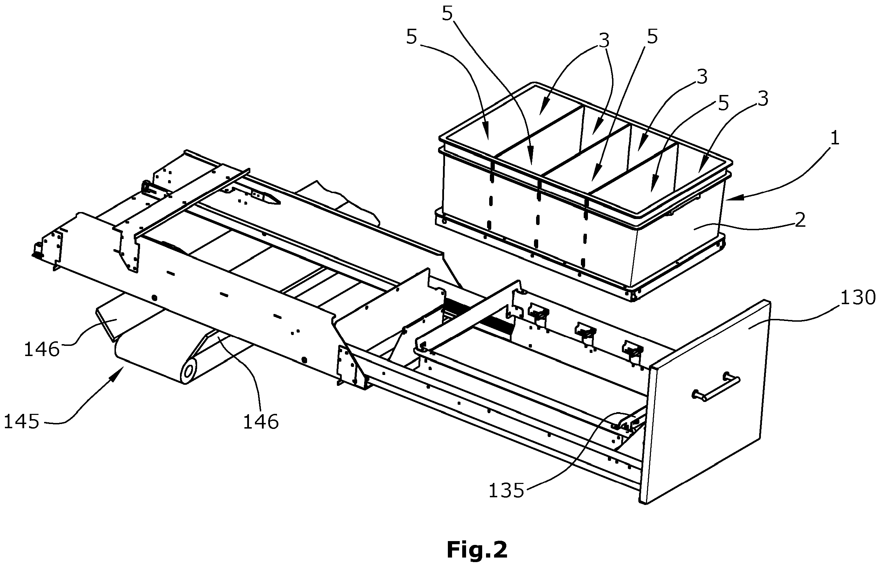

In Fig. 2 ist eine Schublade 130 der in Fig. 1 dargestellten Warenübergabevorrichtung 110 sowie eine zu dieser Warenübergabevorrichtung passende Beladevorrichtung 1 schematisch in einer perspektivischen Darstellung gezeigt. In Fig. 2 ist die Schublade 130 zu Verdeutlichungszwecken losgelöst von dem Korpus der Warenübergabevorrichtung 110 dargestellt. Die Schublade 130 dient zur Aufnahme der Beladevorrichtung 1. Die Beladevorrichtung 1 kann hierfür in die Schublade 130 eingesetzt werden, so dass die Beladevorrichtung 1 mittels der Schublade 130 in die Warenübergabevorrichtung 110 eingeschoben werden kann. Unterhalb der Schublade 130 ist eine Fördervorrichtung 145 in Form eines Förderbandes angeordnet, so dass die Waren aus der Beladevorrichtung 1 auf die Fördervorrichtung 145 fallen können und von dieser zur weiteren Verarbeitung abtransportiert werden können. Seitlich des Förderbandes sind schräg verlaufende Wände 146 angeordnet, die eine Art Trichter für das Förderband bilden, so dass Waren, die aus der Beladevorrichtung 1 fallen, in zuverlässiger Weise auf das Förderband gelangen.

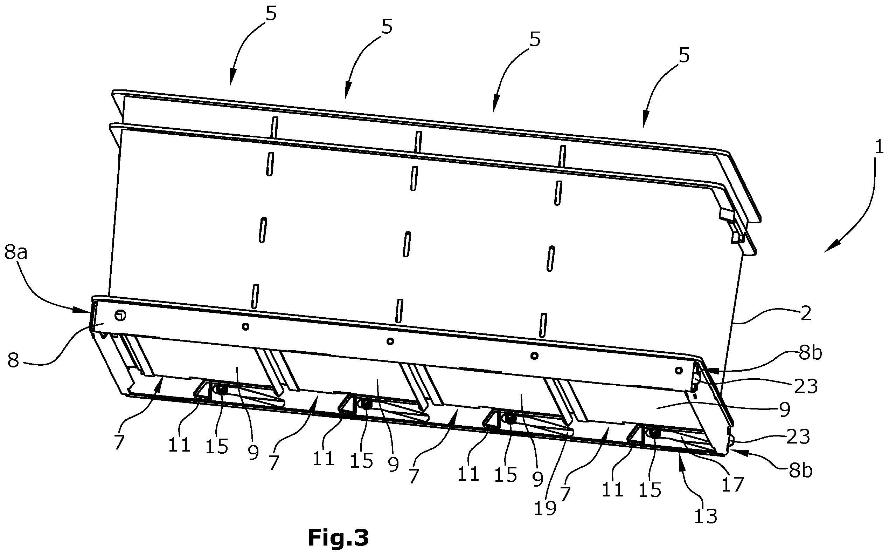

Die Beladevorrichtung 1 besteht aus einem Behälter 2 mit mehreren Fächern 3, in die die Waren als Schüttgut eingefüllt werden können. Jedes Fach weist eine Beladeöffnung 5 auf, die an der Oberseite des Behälters 2 angeordnet ist. Durch die Beladeöffnungen 5 werden die Waren in die Fächer 3 eingegeben. Wie am besten aus Fig. 3 ersichtlich ist, in der die Beladevorrichtung 1 der Fig. 2 in einer schematischen Seitenansicht dargestellt ist, weisen die Fächer 3 an ihrer Unterseite eine Entladeöffnung 7 auf, die jeweils durch eine Rückhalteklappe 9 verschließbar ist. Die Rückhalteklappen 9 sind separat öffenbar und bilden in ihrer geschlossenen Stellung jeweils den Boden eines Faches 3.

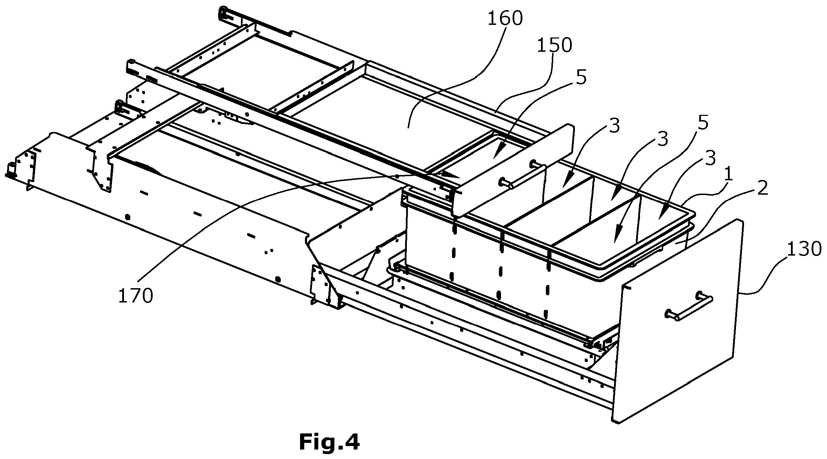

In Fig. 4 ist die Schublade der Fig. 2 in einer anderen Arbeitsposition gezeigt. Die Beladevorrichtung 1 ist in die Schublade 130 eingesetzt. Oberhalb der Schublade 130 ist eine zweite Schublade 150 ausziehbar, die eine Platte 160 aufweist. Im geschlossenen Zustand der Schublade 130 und der zweiten Schublade 150 deckt die Platte die Beladeöffnungen 5 der Fächer 3 ab, so dass verhindert wird, dass bei der Entladung der Fächer 3 Waren durch die Beladeöffnungen 5 aus den Fächern 3 herausspringen. Im geöffneten Zustand der Schublade 130 können mittels der zweiten Schublade 150 einzelne Fächer 3 befüllt werden. Dazu weist die Schublade 150 eine an die Beladeöffnung 5 angepasste Öffnung 170 auf. Die zweite Schublade 150 kann ausgezogen werden, so dass die Aussparung 170 oberhalb einer der Beladeöffnungen 5 angeordnet ist. Auf die Platte 160 können nun die Waren gelegt werden und einfach in Richtung der Aussparung 170 geschoben werden, so dass sie durch die Beladeöffnung 5 in das eine Fach 3 fallen. Die zweite Schublade 150 dient somit dazu, eine in der Schublade 130 angeordnete Beladevorrichtung 1 zu befüllen. Die zweite Schublade 150 kann eine Rastvorrichtung aufweisen, mittels der die zweite Schublade 150 in unterschiedlichen Rastpositionen, in denen sich die Aussparung 170 oberhalb einer Beladeöffnung 5 befindet, eingerastet werden kann. Die zweite Schublade 150 ist optional und die Schublade 130 ist auch grundsätzlich ohne die zweite Schublade 150 verwirklichbar.

Grundsätzlich ist die in den Figuren gezeigte Beladevorrichtung 1 als mobiler Behälter vorgesehen, so dass eine befüllte Beladevorrichtung 1 in eine leere Schublade 130 eingesetzt wird bzw. gegen eine entleerte Beladevorrichtung 1 ausgetauscht wird. Daher weist, wie aus Fig. 1 ersichtlich ist, bei dem gezeigten Ausführungsbeispiel die Übergabevorrichtung 110 vier Schubladen 130 auf, so dass beim Austausch einer Beladevorrichtung 1 in einer der Schubladen die restlichen drei Schubladen 130 noch Ware enthalten können, so dass die Übergabevorrichtung 110 beim Austausch einer Beladevorrichtung 1 weiter im Betrieb bleiben kann. Die Übergabevorrichtung 110 kann daher über einen sehr langen Zeitraum Waren an den Manipulator 120 übergeben.

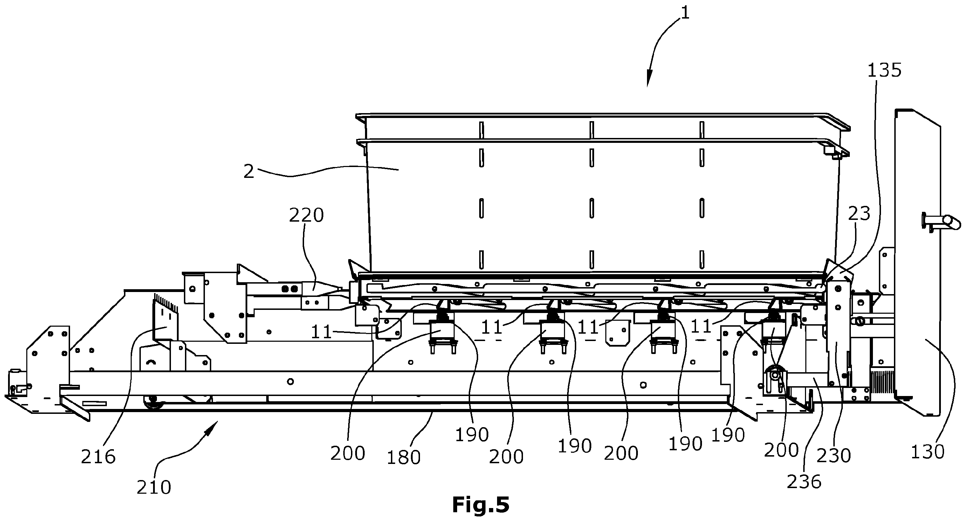

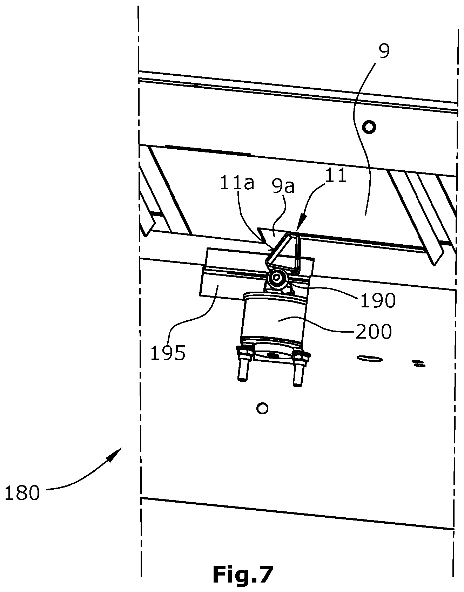

An der Schublade 130 ist eine Riegelvorrichtung 180 angeordnet, die am besten aus Fign. 5 und 7 ersichtlich ist. Die Fig. 5 zeigt die Schublade der Fig. 2 schematisch in einer Seitenansicht, wobei Teile der Schubladenführung zu Verdeutlichungszwecken nicht dargestellt sind, und Fig. 7 zeigt eine Detaildarstellung der Riegelvorrichtung 180.

Die Riegelvorrichtung 180 weist in dem dargestellten Ausführungsbeispiel für jede der Fächer 3 einen separaten Riegel 190 auf, wobei jeder Riegel über einen eigenen Antrieb 200 steuerbar ist. In der in die Schublade 130 eingesetzten Position der Beladevorrichtung 1 liegen die Riegel 190 an der Rückhalteklappe 9 an, um diese in einer geschlossenen Position zu halten. Dazu weisen die Rückhalteklappen 9 jeweils ein Vorsprungelement 11 auf, an dessen Unterseite die Riegel 190 jeweils anliegen.

Mittels der Antriebe 200 können die Riegel 190 einzeln in eine entriegelte Position geführt werden, so dass die entsprechende Rückhalteklappe 9 schwerkraftbedingt nach unten aufklappen kann. Dadurch können die in den Fächern 3 aufgenommenen Waren aus den Fächern herausfallen. In der entriegelten Position sind die Riegel 190 seitlich weggeklappt und tauchen in eine entsprechende Aussparung 195 ein. Beim Schließen der Rückhalteklappen 9 kann vorgesehen sein, dass sich die Riegel 190 zunächst in der entriegelten Position befinden und nach Schließen der Rückhalteklappen 9 in die Schließposition verschwenkt werden, um an der Unterseite des Vorsprungselements 11 anzuliegen. Alternativ kann vorgesehen sein, dass die Riegel 190 bereits in der geöffneten Position der Rückhalteklappe 9 in ihre Schließposition bewegt werden und anschließend die Rückhalteklappe 9 geschlossen wird. Dazu weist die Rückhalteklappe 9 eine Aussparung 9a auf, durch die der Riegel 190 beim Schließen der Rückhalteklappe 9 durchtauchen kann. Das Vorsprungselement 11 weist eine Schrägfläche 11a auf, die bei dem Schließvorgang der Rückhalteklappe 9 gegen den Riegel 190 drückt und diesen zur Seite bewegt. Nach vollständigem Schließen der Rückhalteklappe 9 schnappt der Riegel 190 zurück in seine Schließposition und liegt an der Unterseite des Vorsprungselements 11 an.

Um zu verhindern, dass bei dem Transport der Beladevorrichtung 1 die Rückhalteklappen 9 ungewollt öffnen, weist die Beladevorrichtung 1 eine Sicherungsvorrichtung 13 auf, die die Rückhalteklappen 9 in der geschlossenen Position sperren können. Hierzu weist die Sicherungsvorrichtung 13 für jede Rückhalteklappe 9 einen Bolzen 15 auf, der in der gesperrten Position der Sicherheitsvorrichtung 13 an der Rückhalteklappe 9 anliegt. Die Bolzen 15 sind mittels einer Schubstange 17 verbunden und in einer Kulissenführung 19 geführt. Über die Schubstange 17 können die Bolzen 15 von einer gesperrten Position in eine Entsperrposition bewegt werden. Die Sicherheitsvorrichtung 13 kann, wie in Fign. 3 und 5 dargestellt ist, auch zwei Schubstangen 17 mit jeweils daran angeordneten Bolzen 15 aufweisen, so dass die Sicherheitsvorrichtung 13 beidseitig an den Rückhalteklappen 9 anliegt. Dadurch kann ein Verbiegen der Rückhalteklappen 9 im befüllten Zustand der Fächer 3 vermieden werden.

Wie am besten aus Fig. 3 ersichtlich ist, sind die Schubstangen 17 der Sicherungsvorrichtung 13 in einem Metallrahmen 8 angeordnet, der die Sicherungsvorrichtung 13 vor mechanischen Einflüssen von außen schützt.

Die Sicherungsvorrichtung 13 weist ein Angreifelement 21 auf, das zur Betätigung der Sperrfunktion bzw. Entsperrfunktion der Rückhalteklappen dient. Das Angreifelement 21 wird in dem in den Figuren dargestellten Ausführungsbeispiel mittels einer Auslösevorrichtung 210 betätigt. Die Auslösevorrichtung 210 weist ein Zapfenelement 220 auf, das an der Führung der Schublade 130 angeordnet ist. Beim Schließen der Schublade 130 drückt das Zapfenelement 220 gegen einen ersten Teil 22 des Angreifelements 21 der Schubstange 17 und schiebt diese in die Entsperrposition. Die Sicherungsvorrichtung 13 kann ein Federelement 24 aufweisen, das eine ungewollte Bewegung der Schubstange 17 verhindert, wobei das Zapfenelement 220 beim Zusammenwirken mit der Sicherungsvorrichtung 13 das Federelement 24 zunächst lösen kann. Dabei wird das Federelement 24 von einer Entsperreinrichtung 222 des Zapfenelements 220 zunächst nach oben gedrückt, bevor das Zapfenelement 220 mittels einer Stufe 220a gegen den ersten Teil 22 des Angreifelements 21 drückt. Die Entsperreinrichtung 222 weist hierzu eine Schrägfläche auf, die gegen das Federelement 24 drückt. In einem nicht dargestellten Ausführungsbeispiel kann das Zapfenelement 220 auch an der Schublade 130 angeordnet sein und wird somit mit der Schublade 130 mitgeführt. Erst ab einer bestimmten Einschubtiefe der Schublade 130 erfolgt eine Bewegung des Zapfenelements 220 gegenüber der Schublade 130 wodurch das Zapfenelement 220 gegen den ersten Teil 22 des Angreifelements 21 der Schubstange 17 drückt und diese in die Entsperrposition schiebt. Die Bewegung des Zapfenelements 220 gegenüber der Schublade 130 kann beispielsweise durch einen Anschlag an der Führung der Schublade 130 ausgelöst werden.

Die Auslösevorrichtung 210 kann ferner ein Anschlagelement 230 aufweisen, das mit einem zweiten Teil 23 des Angreifelements 21 der Schubstange 17 zusammenwirkt. Das Angreifelement 21 kann somit zweiteilig ausgebildet sein und beidseitig der Schubstange 17 angeordnet sein. Beim Öffnen der Schublade 130 stößt das Anschlagelement 230 in einer bestimmten Position gegen den zweiten Teil 23 und schiebt die Schubstange 17 der Sicherungsvorrichtung 13 in die Sperrposition.

Das Anschlagselement 230 der Auslösevorrichtung 210 ist beweglich mit der Schublade 130 gekoppelt. Das Anschlagelement 230 wird beim Öffnen der Schublade zunächst mit dieser mitbewegt und mittels einer Rückhalteeinrichtung 236 ab einer vorgegebenen Öffnungsweite der Schublade gegenüber der Schublade fixiert. Dadurch kann der zweite Teil 23 des Angreifelements 21 bei einem fortgeführten Öffnungsvorgang der Schublade 130 gegen das Anschlagelement 230 stoßen, so dass die Schubstange 17 in ihre Sperrposition geschoben wird.

Dadurch ist sichergestellt, dass vor dem Entnehmen der Beladevorrichtung 1 die Rückhalteklappen 9 in ihrer geschlossenen Position gesichert sind.

Der Metallrahmen 8 kann erste Schlitze 8a aufweisen, durch die die Auslösevorrichtung 210 eingreifen kann. Ferner können zweite Schlitze 8b vorgesehen sein, durch die der zweite Teil 23 des Angreifelements 21 in der entsperrten Position der Sicherungsvorrichtung 13 aus dem Metallrahmen 8 herausragen kann.

Die Schublade 130 weist ferner ein Rahmenelement 135 auf, das die Schubstange 17 mit dem zweiten Teil 23 des Angreifelements 21 in der entsperrten Position der Sicherungsvorrichtung 13 umgreift. Somit verhakt sich die Beladevorrichtung 1 an dem Rahmenelement 135, wenn die Sicherheitsvorrichtung 13 in ihrer entsperrten Position ist, so dass die Beladevorrichtung 1 nicht aus der Schublade herausgenommen werden kann. Somit wird sichergestellt, dass die Beladevorrichtung 1 nur aus der Schublade 130 entnommen werden kann, wenn die Sicherheitsvorrichtung 13 in ihrer Sperrposition ist.

Ferner kann vorgesehen sein, dass mittels einer Betätigungsvorrichtung 216 die Rückhalteklappen 9 beim Aufziehen der Schublade 130 in die geschlossene Stellung bewegt werden. Die Betätigungsvorrichtung 216 ist als Streifplatte mit einem flexiblen Oberabschnitt, beispielsweise einer Bürstenleiste, ausgebildet, die die Rückhalteklappen 9 in die Schließposition drückt.

Es besteht auch die Möglichkeit, dass die Rückhalteklappen mittels der Sicherungsvorrichtung 13 in ihre geschlossene Position bewegt werden, indem beim Verschieben der Schubstange 17 in die Sperrposition die Rückhalteklappen 9 mittels der Bolzen 15 in die geschlossene Position gedrückt werden.

Die Beladevorrichtungen 1 können eine unterschiedliche Anzahl von Fächern aufweisen. Die Beladevorrichtung 1 kann beispielsweise neben den dargestellten vier Fächern auch nur drei oder auch fünf Fächer aufweisen. Auch eine andere Anzahl von Fächern ist selbstverständlich möglich.

Die Warenübergabevorrichtung kann eine beliebige Anzahl von Behältervorrichtungen 1 in entsprechender Anzahl von Aussparungen 140 aufnehmen. Beispielsweise sind 3, 5 oder 6 Aussparungen 140 möglich.

Die Entladeöffnungen 7 können manuell oder automatisch betätigt werden.

Die Beladevorrichtungen 1 haben in ihrer mobilen Ausführungsform den Vorteil, dass an einem von der Übergabevorrichtung 110 unabhängigen Ort Waren in die Beladevorrichtung 1 eingefüllt werden können und die Beladevorrichtung 1 dann zu der Übergabevorrichtung 110 transportiert werden kann. Dadurch, dass eine Beladevorrichtung 1 mehrere Fächer 3 aufweist, die separat voneinander entleerbar sind, kann bei einer automatischen Betätigung der Rückhalteklappen 9 die Übergabevorrichtung 110 automatisch arbeiten, ohne dass der Benutzer tätig werden muss. Durch das Vorsehen von mehreren Beladevorrichtungen 1 kann die Warenübergabevorrichtung 110 über einen relativ langen Zeitraum ohne Zutun des Benutzers Waren übernehmen und an den Manipulator 120 des Warenlagers 100 übergeben, so dass der Benutzer in der Zwischenzeit andere Tätigkeiten übernehmen kann oder Beladevorrichtungen 1 zum Austausch nachfüllen kann.

Mittels der Beladevorrichtung 1 und der erfindungsgemäßen Warenübergabevorrichtung 110 lassen sich somit große Mengen an Waren in vorteilhafter Weise in ein automatisches Warenlager 100 einlagern.

## Patentansprüche

1. Warenübergabevorrichtung (110) eines automatischen Warenlagers (100) mit mindestens einer Beladevorrichtung (1) zur Aufnahme von Waren als Schüttgut und Übergabe an die Warenübergabevorrichtung (110),
wobei die Beladevorrichtung (1) aus mindestens einem Behälter (2) mit mehreren Fächern (3) besteht, in denen die Waren aufnehmbar sind, wobei die Fächer (3) jeweils eine Beladeöffnung (5) zum Eingeben der Waren und eine Entladeöffnung (7) zur Ausgabe der Waren aufweisen,
wobei die Entladeöffungen (7) an einer Unterseite des Behälters (2) ausgebildet sind und jeweils mit mindestens einer Rückhalteklappe (9) verschließbar sind, wobei die Rückhalteklappen (9) zumindest teilweise den Boden des Behälters (2) bilden und
wobei jede Rückhalteklappe (9) zum Öffnen separat steuerbar ist,
und mit einer Fördervorrichtung (145), die unterhalb der Entladeöffnungen (7) angeordnet ist oder anordenbar ist, die die Waren von der Beladevorrichtung (1) übernimmt,
**gekennzeichnet durch**
eine Aussparung (140) zur Aufnahme der mindestens einen Beladevorrichtung (1),
wobei in der Aussparung (140) mindestens eine Schublade (130) zur Aufnahme der Beladevorrichtung (1) angeordnet ist, wobei über die Schublade (130) die Beladevorrichtung (1) in die Warenübergabevorrichtung (110) einschiebbar und in Position für die Übergabe der Waren anordenbar ist.

2. Warenübergabevorrichtung nach Anspruch 1, **dadurch gekennzeichnet, dass** die Beladeöffnungen (5) auf einer Oberseite des Behälters (2) ausgebildet sind.

3. Warenübergabevorrichtung nach Anspruch 1 oder 2, **dadurch gekennzeichnet, dass** der Behälter (2) als mobiler Behälter ausgebildet ist.

4. Warenübergabevorrichtung nach einem der Ansprüche 1 bis 3, **dadurch gekennzeichnet, dass** eine Riegelvorrichtung (180) die Rückhalteklappen (9) in einer Schließposition hält, wobei die Riegelvorrichtung (180) mit jeweils mindestens einem Riegel (190) an einer der Rückhalteklappen (9) angreift und durch Betätigung eines der Riegel (190) eine der Rückhalteklappen (9) schwerkraftbedingt öffenbar ist, wobei vorzugsweise die Riegelvorrichtung (180) mechanisch oder elektrisch antreibbar ist.

5. Warenübergabevorrichtung nach einem der Ansprüche 1 bis 4, **dadurch gekennzeichnet, dass** eine Sicherungsvorrichtung (13) die Rückhalteklappen (9) gegen ein unbeabsichtigtes Öffnen sperrt, wobei vorzugsweisedass die Sicherungsvorrichtung (13) ein Angreifelement (21) zum Betätigen der Sperrfunktion der Rückhalteklappen (9) aufweist.

6. Warenübergabevorrichtung nach Anspruch 5, **dadurch gekennzeichnet, dass** die Rückhalteklappen (9) über eine Betätigung der Sicherungsvorrichtung (13) schließbar sind und/oder dass die Sicherungsvorrichtung (13) mindestens eine Schubstange (17) aufweist, die mittels Bolzen (15) in einer Kulissenführung (19) geführt ist, wobei in der Sperrposition die Bolzen (15) an den Rückhalteklappen (9) anliegen.

7. Warenübergabevorrichtung nach Anspruch 5 oder 6, **dadurch gekennzeichnet, dass** in der Sperrposition der Sicherungsvorrichtung (13) ein Federelement (24) an dem Angreifelement (21) anliegt und die Sicherungsvorrichtung (13) in der Sperrposition hält.

8. Warenübergabevorrichtung nach einem der Ansprüche 5 bis 7, **gekennzeichnet, durch** eine Auslösevorrichtung (210) zur Betätigung der Sicherungsvorrichtung (13) der Beladevorrichtung (1), die an dem Angreifelement (21) der Sicherungsvorrichtung (13) angreift.

9. Warenübergabevorrichtung nach Anspruch 8, **dadurch gekennzeichnet, dass** die Auslösevorrichtung (210) eine Entsperreinrichtung (222) aufweist, die während des Entsperrens der Sicherungsvorrichtung (13) gegen das Federelement (24) drückt.

10. Warenübergabevorrichtung nach Anspruch 8 oder 9, **dadurch gekennzeichnet, dass** die Auslösevorrichtung (210) ein Anschlagselement (230) aufweist, das während eines Entnahmevorgangs der Beladevorrichtung (1) gegen die Sicherungsvorrichtung (13) drückt und diese in die Sperrpostion bewegt.

11. Warenübergabevorrichtung nach einem der Ansprüche 1 bis 10, **dadurch gekennzeichnet, dass** eine Riegelvorrichtung (180) jeweils mit mindestens einem Riegel (190) an einer Rückhalteklappe (9) der Beladevorrichtung (1) angreift, wobei vorzugsweise die Riegelvorrichtung (180) für jeden Riegel (190) einen separaten Antrieb (200) aufweist.

12. Warenübergabevorrichtung nach einem der Ansprüche 1 bis 11, **gekennzeichnet durch** eine Betätigungsvorrichtung (216) zum Schließen der Rückhalteklappen (9), wobei vorzugsweise die Betätigungsvorrichtung (216) eine Streifplatte mit einem flexiblen Oberabschnitt aufweist, wobei die Streifplatte bei einer Bewegung der Beladevorrichtung (1) über die Betätigungsvorrichtung (216) die Rückhalteklappen (9) schließt.

13. Warenübergabevorrichtung nach einem der Ansprüche 1 bis 12, **dadurch gekennzeichnet dass** die Schublade (130) ein Rahmenelement (135) aufweist, das die Sicherungsvorrichtung (13) in der Entsperrposition umgreift und/oder dass das Anschlagelement (230) der Auslösevorrichtung (210) mit der Schublade (130) beweglich gekoppelt ist und eine Rückhalteeinrichtung (236) das Anschlagelement (230) beim Öffnen der Schublade (130) ab einer vorgegebenen Öffnungsweite der Schublade (130) gegenüber der Schublade (130) fixiert.

14. Warenübergabevorrichtung nach einem der Ansprüche 1 bis 13, **dadurch gekennzeichnet, dass** an der Unterseite jeder Rückhalteklappe (9) ein Vorsprungselement (11) angeordnet ist, an dem jeweils ein Riegel (190) angreift, wobei das Vorsprungselement (11) eine Schrägfläche (11a) aufweist, die während des Schließvorgangs der Rückhalteklappe (9) gegen den Riegel (190) drückt.

15. Warenlager (100) mit einer Warenübergabevorrichtung (110) nach einem der Ansprüche 1 bis 14, **gekennzeichnet durch** mindestens einen Manipulator (120), der die Waren von der Warenübergabevorrichtung (110) übernimmt.

## Claims

1. A goods transfer device (110) of an automatic goods storage system (100), comprising at least one loading device (1) for receiving goods in the form of bulk and transferring them to the goods transfer device (110),
wherein the loading device (1) consists of at least one container (2) including a plurality of compartments (3) in which the goods can be received, wherein said compartments (3) comprise a respective loading opening (5) for introducing the goods and a respective unloading opening (7) for discharging the goods,
wherein the unloading openings (7) are formed at a lower side of the container (2) and are each adapted to be closed by at least one retaining flap (9), wherein the retaining flaps (9) at least partially form the bottom of the container (2), and
wherein each retaining flap (9) is adapted to be controlled separately for being opened,
and comprising a conveyor means (145) arranged or capable of being arranged below the unloading openings (7), taking over the goods from the loading device (1),
**characterized by**
a recess (140) for receiving the at least one loading device (1),
at least one drawer (130) for receiving the loading device (1) is arranged in the recess (140), wherein, vie the drawer (130) the loading device (1) is adapted to be pushed into the goods transfer device (110) and to be arranged in position for the transfer of the goods.

2. The goods transfer device according to claim 1, **characterized in that** the loading openings (5) are formed on a top side of the container (2).

3. The goods transfer device according to claim 1 or 2, **characterized in that** the container (2) is formed as a mobile container.

4. The goods transfer device according to any one of claims 1 to 3, **characterized in that** a latch device (180) holds the retaining flaps (9) in a closed position, wherein the latch device (180) engages, by at least one latch (190), one of the retaining flaps (9) and wherein, by actuation of one of the latches (190), one of the retaining flaps can be opened under the effect of gravity, wherein preferably the latch device (180) can be driven mechanically or electrically.

5. The goods transfer device according to any one of claims 1 to 4, **characterized in that** a safety device (13) blocks the retaining flaps (9) against unintended opening, wherein preferably the safety device (13) comprises an engagement element (21) for actuating the blocking function of the retaining flaps (9).

6. The goods transfer device according to claim 5, **characterized in that** the retaining flaps (9) are closeable through actuation of the safety device (13) and/or that the safety device (13) comprises at least one push rod (17) which, by means of bolts (15), is guided in a sliding guide path (19), wherein, in the blocking position, said bolts (15) are in abutment on the retaining flaps (9).

7. The goods transfer device according to claim 5 or 6, **characterized in that**, in the blocking position of the safety device (13), a spring element (24) is in abutment on the engagement element (21) and keeps the safety device (13) in the blocking position.

8. A goods transfer device (110) according to any one of claims 5 to 7, **characterized by** a triggering device (210) for triggering the safety device (13) of the loading device (1), said triggering device engaging the engagement element (21) of the safety device (13).

9. The goods transfer device according to claim 8, **characterized in that** the triggering device (210) comprises an unblocking device (222) which presses against the spring element (24) during the unblocking of the safety device (13).

10. The goods transfer device according to claim 8 or 9, **characterized in that** the triggering device (210) comprises a stopper element (230) which during a removing process of the loading device (1) presses against the safety device (13) and moves it into the locking position.

11. The goods transfer device according to any one of claims 1 to 10, **characterized in that** a latch device (180) engages a retaining flap (9) of the loading device (1) by at least one latch (190), respectively, wherein preferably the latch device (180) comprises a separate drive (200) for each latch (190).

12. The goods transfer device according to any one of claims 1 to 11, **characterized by** an actuating device (216) for closing the retaining flaps (9), wherein preferably the actuating device (216) comprises a strip plate having a flexible upper portion, wherein, upon movement of the loading device (1) via the actuating device (216), the strip plate closes the retaining flaps (9).

13. The goods transfer device according to any one of claims 1 to 12, **characterized in that** said drawer (130) comprises a frame element (135) which in the unblocking position grips around the safety device (13) and/or that the stopper element (230) of the triggering device (210) is movably coupled with the drawer (130) and that, when the drawer (130) is opened, a retaining device (236) fixes the stopper element (230) relative to the drawer (130) once a predefined opening width of the drawer (130) has been reached.

14. The goods transfer device according to any one of claims 1 to 3, **characterized in that** the underside of each retaining flap (9) has a projection element (11) arranged thereon which is engaged by a respective latch (190), wherein the projection element (11) comprises an oblique surface (11a) which during the closing process of the retaining flap (9) presses against the latch (190).

15. A goods storage system (100) having a goods transfer device (110) according to any one of claims 1 to 14, **characterized by** at least one manipulator (120) taking over the goods from the goods transfer device (110).

## Revendications

1. Dispositif de remise de marchandises (110) d'un entrepôt de marchandises automatique (100) doté d'au moins un dispositif de chargement (1) destiné à accueillir les marchandises en vrac et à les remettre au dispositif de remise de marchandises (110),
dans lequel le dispositif de chargement (1) est constitué d'au moins un récipient (2) doté de plusieurs compartiments (3), les marchandises pouvant être accueillies dans ceux-ci, dans lequel les compartiments (3) comportent respectivement une ouverture de chargement (5) pour l'entrée des marchandises et une ouverture de déchargement (7) pour la sortie des marchandises,
dans lequel les ouvertures de déchargement (7) sont réalisées sur une face inférieure du récipient (2) et peuvent respectivement être fermées avec au moins une trappe de retenue (9), dans lequel les trappes de retenue (9) forment au moins en partie le fond du récipient (2) et
dans lequel l'ouverture de chaque trappe de retenue (9) peut être commandée séparément,
et doté d'un dispositif transporteur (145), lequel est disposé ou peut être disposé en dessous des ouvertures de déchargement (7), lequel reçoit les marchandises du dispositif de chargement (1),
**caractérisé par**
un évidement (140) destiné à accueillir l'au moins un dispositif de chargement (1),
dans lequel au moins un tiroir (130) destiné à accueillir le dispositif de chargement (1) est disposé dans l'évidement (140), dans lequel le dispositif de chargement (1) peut, par le biais du tiroir (130), être inséré dans le dispositif de remise de marchandises (110) et être disposé en position de remise des marchandises.

2. Dispositif de remise de marchandises selon la revendication 1, **caractérisé en ce que** les ouvertures de chargement (5) sont réalisées sur une face supérieure du récipient (2).

3. Dispositif de remise de marchandises selon la revendication 1 ou 2, **caractérisé en ce que** le récipient (2) est réalisé comme récipient mobile.

4. Dispositif de remise de marchandises selon l'une des revendications 1 à 3, **caractérisé en ce qu'**un dispositif de verrouillage (180) maintient les trappes de retenue (9) dans une position fermée, dans lequel le dispositif de verrouillage (180) s'engage avec respectivement au moins un verrou (190) sur une des trappes de retenue (9) et une des trappes de retenue (9) peut s'ouvrir sous son propre poids par actionnement d'un des verrous (190), le dispositif de verrouillage (180) est de préférence entraînable mécaniquement ou électriquement.

5. Dispositif de remise de marchandises selon l'une des revendications 1 à 4, **caractérisé en ce qu'**un dispositif de sécurité (13) bloque les trappes de retenue (9) contre une ouverture intempestive, dans lequel le dispositif de sécurité (13) comporte de préférence un élément d'engagement (21) destiné à actionner la fonction de blocage des trappes de retenue (9).

6. Dispositif de remise de marchandises selon la revendication 5, **caractérisé en ce que** les trappes de retenue (9) peuvent être fermées par le biais d'un actionnement du dispositif de sécurité (13) et/ou **en ce que** le dispositif de sécurité (13) comporte au moins une bielle de poussée (17), laquelle est guidée dans un guidage à coulisse (19) au moyen de boulons (15), dans lequel les boulons (15) reposent sur les trappes de retenue (9) dans la position de blocage.

7. Dispositif de remise de marchandises selon la revendication 5 ou 6, **caractérisé en ce que** dans la position de blocage du dispositif de sécurité (13) un élément de ressort (24) repose sur l'élément d'engagement (21) et maintient le dispositif de sécurité (13) dans la position de blocage.

8. Dispositif de remise de marchandises selon l'une des revendications 5 à 7, **caractérisé par** un dispositif de déclenchement (210) destiné à actionner le dispositif de sécurité (13) du dispositif de chargement (1) et s'engage sur l'élément d'engagement (21) du dispositif de sécurité (13).

9. Dispositif de remise de marchandises selon la revendication 8, **caractérisé en ce que** le dispositif de déclenchement (210) comporte un moyen de déblocage (222), lequel appuie contre l'élément de ressort (24) pendant le déverrouillage du dispositif de sécurité (13).

10. Dispositif de remise de marchandises selon la revendication 8 ou 9, **caractérisé en ce que** le dispositif de déclenchement (210) comporte un élément de butée (230), lequel appuie contre le dispositif de sécurité (13) pendant une opération de prélèvement du dispositif de chargement (1) et déplace celui-ci dans la position de blocage.

11. Dispositif de remise de marchandises selon l'une des revendications 1 à 10, **caractérisé en ce qu'**un dispositif de verrouillage (180) s'engage avec au moins un verrou (190) respectivement sur une trappe de retenue (9) du dispositif de chargement (1), dans lequel le dispositif de verrouillage (180) comporte de préférence un entraînement séparé (200) pour chaque verrou (190).

12. Dispositif de remise de marchandises selon l'une des revendications 1 à 11, **caractérisé par** un dispositif d'actionnement (216) destiné à fermer les trappes de retenue (9), dans lequel le dispositif d'actionnement (216) comporte de préférence une plaque de touche dotée d'une section supérieure flexible, dans lequel la plaque de touche ferme les trappes de retenue (9) lors d'un déplacement du dispositif de chargement (1) par le biais du dispositif d'actionnement (216).

13. Dispositif de remise de marchandises selon l'une des revendications 1 à 12, **caractérisé en ce que** le tiroir (130) comporte un élément de cadre (135), lequel entoure le dispositif de sécurité (13) dans la position de déblocage et/ou **en ce que** l'élément de butée (230) du dispositif de déclenchement (210) est couplé de manière mobile au tiroir (130) et un dispositif de retenue (236) fixe l'élément de butée (230) par rapport au tiroir (130) lors de l'ouverture du tiroir (130) à une largeur d'ouverture du tiroir (130) prédéfinie.

14. Dispositif de remise de marchandises selon l'une des revendications 1 à 13, **caractérisé en ce qu'**un élément saillant (11), sur lequel s'engage respectivement un verrou (190), est disposé sur la face inférieure de chaque trappe de retenue (9), dans lequel l'élément saillant (11) comporte une surface inclinée (11a), laquelle appuie sur le verrou (190) pendant l'opération de fermeture de la trappe de retenue (9).

15. Entrepôt de marchandises (100) doté d'un dispositif de remise de marchandises (110) selon l'une des revendications 1 à 14, **caractérisé par** au moins un manipulateur (120), lequel reçoit les marchandises du dispositif de remise de marchandises (110).
